# EUROPÄISCHE PATENTANMELDUNG

(11) **EP 1 898 344 A1**
(43) Veröffentlichungstag der Anmeldung: **12.03.2008**
(21) Anmeldenummer: 06018529.5
(22) Anmeldetag: 05.09.2006
(51) Int. Cl.: G06Q 10/00

(54) **Arbeitsplatzsystem mit Anwendungsprogramm zu einer Benutzeroberfläche und zugehöriges Computerprogrammprodukt**

(71) Anmelder: Scheuring Project Management AG, 4310 Rheinfelden (DE)
(72) Erfinder: Scheuring, Heinz, 4313 Möhlin (CH)
(74) Vertreter: Kley, Hansjörg

(57) **Zusammenfassung**

Um einem Benutzer eines Arbeitsplatzsystems den zugriff auf eine Vielzahl von über Links zugänglichen Daten zu ermöglichen, ist in eine Mehrzahl von Desksets (11) vorgesehen, wobei
i) jeder Deskset (11) aus einer Mehrzahl von Desks (12) gebildet wird, die aus dem Deskset (11) durch verweise (16, 13) zugänglich sind;
ii) jeder Deskset (11) durch ein Bildschirmelement (15) identifiziert und adressierbar ist;
iii) jeder Desk (12) eine Mehrzahl von Links (14) für den Zugriff auf Daten aufweist und/oder in jedem Desk (12) Daten direkt angezeigt werden.

## Beschreibung

Die vorliegende Erfindung betrifft ein Arbeitsplatzsystem mit Anwendungsprogramm zu einer Benutzeroberfläche gemäss dem Oberbegriff des Patentanspruches 1 und ein zugehöriges Computerprogrammprodukt gemäss Patentanspruch 11.

Im folgenden wird anstelle einer deutschen Nichtfachsprache die englisch-sprachige Nomenklatur wie z.B. «link» oder «workflow» oder «frame» verwendet. Dadurch lassen sich Unklarheiten vermeiden. Eine Liste der verwendeten Abkürzungen, Akronyme und Begriffe am Schluss dieses Dokumentes ist integraler Bestandteil dieser Schrift.

Der Benutzer eines Arbeitsplatzsystems - oft auch nur Computersystem genannt - ist mit dem Problem konfrontiert, sehr grosse Mengen an Daten zu verwalten und zu bearbeiten. Wegen der enormen Datenfülle ist eine optimale Strukturierung dieser Daten sowie eine einfache, schnelle und transparente Navigation zu diesen Daten äusserst wichtig. Dies kann jedoch nicht einheitlich für alle Benutzer durch ein bestimmte Oberfläche gelöst werden. Die Bedürfnisse verschiedener Benutzer bezüglich des gesamten zur Verfügung stehenden Informationsangebots sind sehr unterschiedlich, sowohl betreffend der Relevanz der Daten überhaupt als auch bezüglich deren Bedeutung und damit auch der Häufigkeit des Zugriffs. Aus diesem Grunde ist es wünschbar, einerseits das Angebot an Daten so zu strukturieren, dass ein einfacher und schneller Zugriff mit einer möglichst kleinen Anzahl an Operationen - insbesondere mittels Mausklicks - möglich wird. Andererseits ist es eine Notwendigkeit, die Auswahl der Daten und die Struktur des Zugangs an die Bedürfnisse von Benutzergruppen oder einzelner Benutzer individuell anpassen zu können.

Der implizit bekannte Stand der Technik bietet als Antwort auf diese Herausforderungen die Portaltechnik an, bei der das Informationsangebot auf dem Bildschirm einerseits in verschiedene Bildschirmfenster, die auch «Frames» genannt werden, aufgeteilt wird, Dabei werden diese Fensterkompositionen bzw. «frames» individualisiert und damit an die Bedürfnisse verschiedener Benutzer oder Benutzergruppen individuell anpassbar. Die mittels dieser Portaltechnik auf diese Weise erschliessbare Menge an Daten bleibt dabei limitiert, und die Möglichkeit, dass ein Benutzer oder eine Benutzergruppe je nach aktueller Aufgabenstellung mit unterschiedlichen Bedürfnissen bezüglich Informationsinhalten auch unterschiedliche Zugänge nutzen kann, ist begrenzt.

In US 2006/0069596 A1 [1] ist ein Anwendungssystem offenbart, hier «virtual workflow operating system» genannt, das verschiedene Workflows zusammenfasst und in einer Benutzeroberfläche GUI dem Anwender mit vordefinierten Formularen präsentiert wird. Dieses System ist durch die Anwender nicht frei konfigurierbar.

Der vorliegenden Erfindung liegt daher die Aufgabe zugrunde, ein Arbeitsplatzsystem mit einer Benutzeroberfläche für den Zugriff auf Daten anzugeben, das die vorgenannten Einschränkungen überwindet und in einer mehrstufigen Weise einen flexiblen, differenzierten Zugang zu einer grossen Informations- und Datenmenge ermöglicht, wobei dieser Zugang für beliebige Benutzer oder Benutzergruppen unterschiedlich gestaltet werden kann.

Diese Aufgabe wird gelöst mit einem Arbeitsplatzsystem enthaltend ein An-wendungs-programm mit einer Benutzeroberfläche für den zugriff auf Daten, dessen Merkmale im Patentanspruch 1 angegebenen sind sowie mit einem Computerprogrammprodukt nach Anspruch 11.

Durch die erfindungsgemässe Lösung, wonach
«diese Benutzeroberfläche durch eine Mehrzahl von Desksets gebildet wird, wobei
i) jeder Deskset aus einer Mehrzahl von Desks gebildet wird, die aus dem Deskset durch Verweise zugänglich sind;
ii) jeder Deskset durch ein Bildschirmelement identifiziert und adressierbar ist;
iii) jeder Desk eine Mehrzahl von Links für den Zugriff auf Daten aufweist und/oder in jedem Desk Daten angezeigt werden.
ist eine Benutzeroberfläche für ein Arbeitsplatzsystem geschaffen, die eine freie Zusammenstellung von Links auf Daten oder direkt auf Daten in «Desks» ermöglicht und somit einem Benutzer erlaubt, in einer strukturierten und auf seine Bedürfnisse angepassten weise auf eine Vielzahl von Daten unterschiedlichster Quellen zuzugreifen.

Weitere vorteilhafte Ausgestaltungen der Erfindung sind in weiteren Ansprüchen angegeben.

Die Erfindung wird nachfolgend anhand der Zeichnung beispielsweise näher erläutert. Dabei zeigen:
- Figur 1: erste prinzipielle Darstellung eines Desksets gemäss einer bevorzugten Ausführungsform des erfindungsgemässen Arbeitsplatzsystems;
- Figur 2: Darstellung einer n:m Beziehung von Desks zu Desksets;
- Figur 3: Darstellung der Benutzeroberfläche für die Generierung eines neuen Desksets.
Eine bevorzugte Ausführungsform der vorliegenden Erfindung wird anhand einer Anwendung für das Projektmanagement gezeigt. Es ist jedoch festzuhalten, dass die Erfindung nicht auf bestimmte Themen und Anwendungen beschränkt ist, sondern auf jedwelchen Zugriff auf grosse Datenmengen irgendwelcher Bedeutung eingesetzt werden kann.

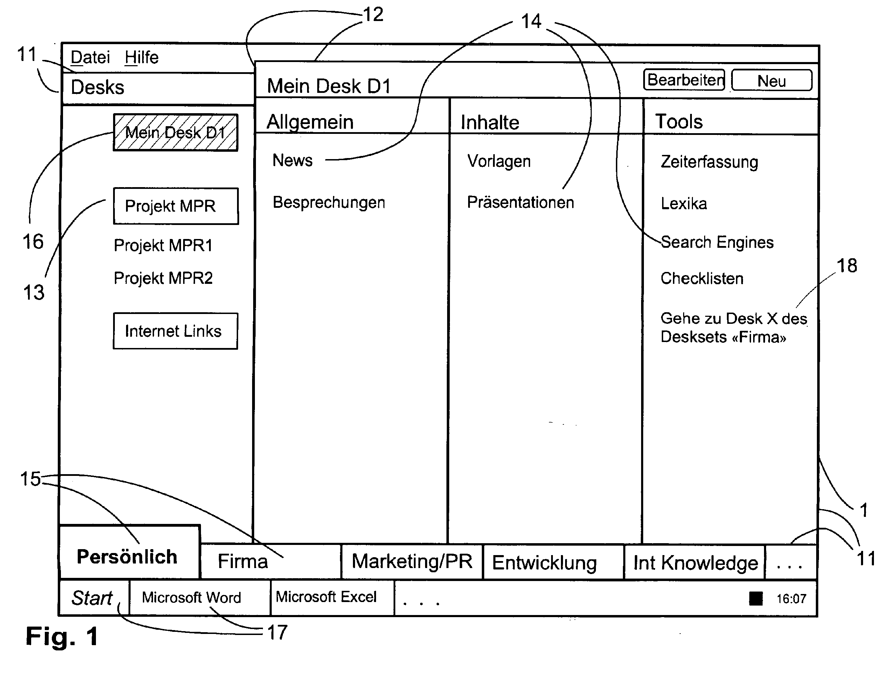

Figur 1 zeigt eine Ausführungsform mit einem Bildschirm 1 mit einer üblichen Gliederung unten gemäss handelsüblichen Benutzeroberflächen eines Betriebssystems wie z.B. Microsoft Windows XP oder Linux und den zugehörigen Icons 17 oder Symbolen 17 der jeweiligen (Anwendungs-) Programme. Oberhalb dieser standardmässigen Oberfläche ist der Bildschirm 1 wie folgt gegliedert:
Im vorgenannten handelsüblichen Rahmen ist linker Hand ein Deskset 11 angeordnet, das eine Mehrzahl von Verweisen 13 und 16 (englisch: links) enthält. Der Verweis 16 geht auf einen aktiven Desk 12, wobei dazu in der Figur 1 der oberste Verweis (=link) auf den Desk D1 als aktiver Deskverweis schraffiert dargestellt ist. Jeder Deskset 11 ist des weiteren durch ein Register 15 adressierbar, statt Register 15 wird auch der Begriff Lasche 15 verwendet, in einer verallgemeinerten Form wird daher von einem Bildschirmelement 15 gesprochen. Ein solches Bildschirmelement kann auch ein Schriftzug, ein Symbol oder Icon oder ein Element eines aufklappbaren Menüs sein.

### Die weitere Gliederung und Funktion ergibt sich wie folgt:

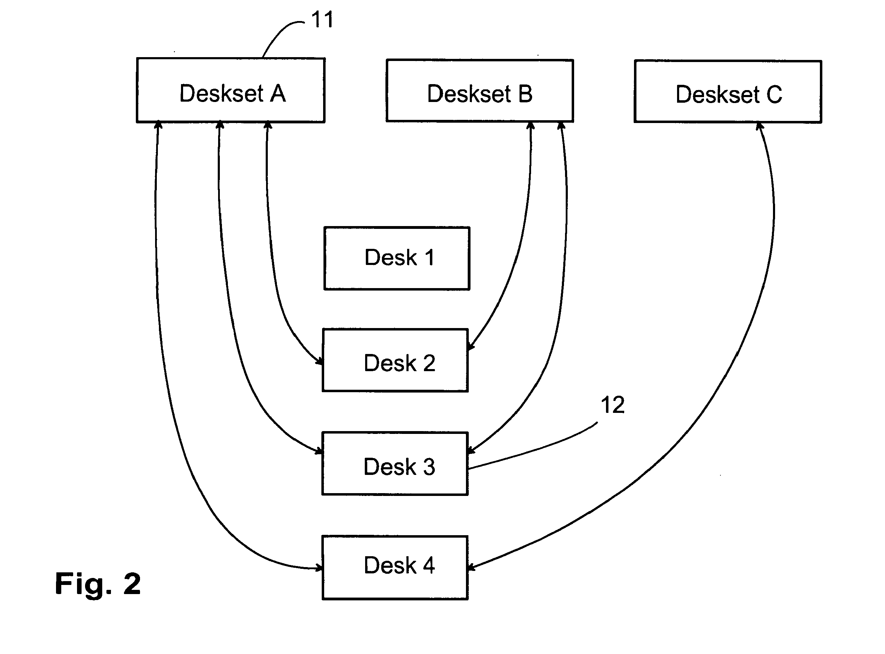

Daten (Text, Tabellen, Grafiken etc.) und/oder die Zusammenstellung von Linksammlungen, die zu Informationen führen, werden in Bildschirmeinheiten, so genannte «Desks» 12, zusammengefasst.
Ein Desk 12 kann aus einem einzelnen Bildschirmfenster oder aus mehreren Fenstern mit ähnlichen oder unterschiedlichen Inhalten (Daten oder Links) bestehen.
Die gesamte Anzahl der in einem System zugänglichen Desks 12 bildet die gesamte Deskmenge.
Aus dieser Deskmenge lassen sich beliebige so genannte Desksets 11, dies sind zusammenstellungen von jeweils 1 bis n Desks 12, definieren.
Unterschiedliche Desksets 11 können die selben Desks 12 der Deskmenge umfassen, die Definition von Desksets 11 erfolgt also sozusagen virtuell, nicht physisch, ein Deskset 11 ist lediglich eine Zusammenstellung von Verweisen auf die entsprechenden Desks 12. Dieses Prinzip ist in der Figur 2 erläutert. Darin ist eine n:m Beziehung zwischen den Desksets 11 und des Desks 12 dargestellt: m Desksets 11 sind n Desk 12 zuordnungsbar und zwar so, dass Änderungen an den Desks (darunter befindliche Links) wahlweise entweder vererbt werden oder lokal auf den betreffenden Desk 12 und damit Deskset 11 beschränkt bleiben.

Sowohl der Zugang zu den Desks 12 eines Desksets 11 als auch zu den verschiedenen Desksets 11 einer gesamten Anwendung, bestehend aus mehreren Desksets, wird dem Benutzer in direktest möglicher Weise angeboten, idealerweise jeweils mit einem einzigen Mausklick oder Befehl.

Das Prinzip der Erfindung ist in Figur 1 gezeigt; darin werden die Desksets 11 in den Registern 15 oder Laschen 15 am unteren Bildschirmrand, die einzelnen Desks 12 eines Desksets 11 im linken Fenster des Bildschirms 1, angeboten.
Desks 12 können verschiedene Bezüge zu Benutzern haben:
- individuelle Desks 12 für einen einzelnen Benutzer;
- Desks für eine Organisationseinheit (Team, Abteilung, Bereich etc.);
- Desks 12 , die für die gesamte Organisation (z.B. Unternehmen) relevant sind.
Desks können Inhalte vom und Bezüge zum geschlossenen System (z.B. dem Unternehmen) sein, aber auch Inhalte vom und Bezüge zum Internet, hier entweder öffentlich zugänglich oder durch Zugangsbedingungen geschützt.

Die Inhalte eines Desks 12 können folgende Herkunft haben (auch gemischt):
- Inhalte eines fremden Systems (z.B. der Inhalt eines Word-Dokumentes);
- Inhalte, die im erfinderischen System gespeichert sind (z.B. eine HTML-Datei);
- Reine Links zu Inhalten, wobei die Links wiederum entweder in einem fremden oder im gleichen betrachteten Arbeitsplatzsystem gespeichert sein können.

Technische Quellen für die Inhalte oder die Links können sein: das lokale Computersystem eines Benutzers (PC), ein Computernetzwerk, ein mobiles Speichermedium, das Internet usw.

Das betrachtete Arbeitsplatzsystem kann eine Datenbank oder mehrere Datenbanken umfassen, in der die Desks 12 und/oder die Desksets 11 gespeichert sind.

Sehr sinnvoll ist neben dem Zugang zum betrachtete Arbeitsplatzsystem auch die Zusammenstellung von Linksammlungen zum Internet; dabei kann ein Deskset 11, aber auch eine ganze Anwendung bestehend aus mehreren Desksets 11, jeweils ein bestimmtes Anwendungsgebiet beinhalten (z.B. Marketing = Anwendung, Direct Marketing = ein Deskset).

Der Inhalt von Desks 12, die Desksets 11 sowie die gesamte Anwendung bzw. von definierten Teilen davon lassen sich durch einen normalen Benutzer und/oder durch eine Verwaltungsstelle definieren. Diese Definitionen wiederum lassen sich für einzelne Benutzer, für Benutzergruppen oder für alle Benutzer festlegen.

Weitere vorteilhafte Ausgestaltungen sind:
- Ein Desk 12 eines Desksets 11 lässt sich in ein anderes Deskset 12 kopieren und von der originären Deskmenge abtrennen, um dieses von Veränderungen am originalen Desk auszuschliessen.
- Für eine Anwendung B lässt sich definieren, dass ein Deskset 12 einer Anwendung A immer Teil der Anwendung B sein soll; die Veränderung des Desksets in der Anwendung A wird in der Anwendung B dabei nachvollzogen (=vererbt). Neu angelegte Desks 12 in der Anwendung B werden auch in der Anwendung A angezeigt (=zurückvererbt). Es ist dabei definierbar, ob Änderungen am Deskset 11 und/oder an den Inhalten einzelner Desks 12 auch aus der Anwendung B oder nur aus der «Geberanwendung» A heraus veränderbar sein sollen; dabei lassen sich ausgewählte Desks 12 des integrierten Desksets 11 ausschliessen und weitere Desks 12 , die nicht Teil des Desksets 11 der Anwendung A sind, ergänzen.
- Von einem Desk 12 eines ersten Desksets 11 lässt sich durch einen definierbaren Link 18 direkt zu einem anderen Desk 12 dieses ersten Desksets 11 oder zu einem Desk 12 eines anderen Desksets 11 springen. Dabei werden auf die übliche Weise die Eingabemittel Tastatur und Bildschirm benutzt.
- Aus verschiedenen Desks 12 eines oder mehrerer Desksets 11 lässt sich eine eigenständige Datenbank generieren, die eine eigenständige Anwendung begründet. Dabei können die Inhalte / Daten am ursprünglichen Ort verbleiben oder von diesem exportiert werden, um eine lokale, unabhängige Anwendung einschliesslich der Inhalte zu generieren. Die Anwendung kann für die Desks 12 sowie für die Desksets 11 Datenfelder anbieten, die der Anwender mit Werten belegen kann, um bezüglich der Desks 12 im Deskset 11 bzw. bezüglich der Desksets 11 in der Anwendung geeignete Filter-, Sortier- oder Gruppierfunktionen zu ermöglichen.
- Die Platzierung - insbesondere die Anordnungsreihenfolge - von Desks 12 im Deskset 11 sowie von Desksets 11 in der Anwendung kann durch den Anwender auch manuell veränderbar gestaltet werden.

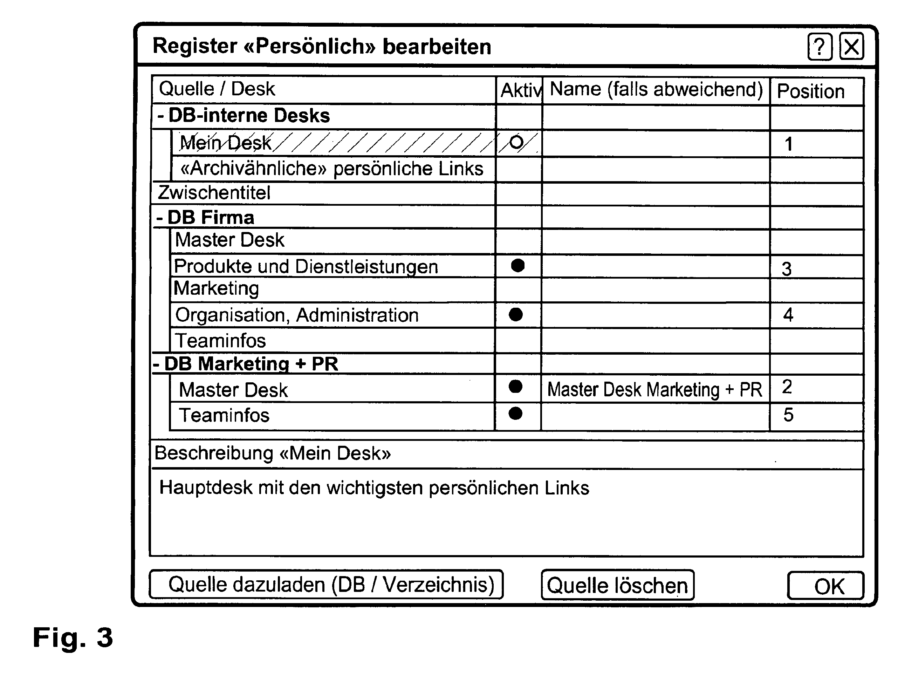

Figur 3 zeigt eine Darstellung der Benutzeroberfläche für die Generierung eines neuen Desksets eines Registers «Persönlich». Darin wird gezeigt, wie das Register «Persönlich » durch einen Benutzer generiert wird:
- Der Benutzer wählt im Programm den Befehl «Neues Deskset erstellen» und gelangt in die gezeigte Bildschirmmaske.
- Der Benutzer wählt über «Quelle dazuladen» die (internen und/oder externen) Quelle/n aus, die anschliessend mit deren Desks angezeigt werden.
- Der Benutzer wählt die gewünschte Desks, indem er in der Spalte «aktiv» eine Markierung setzt.
- Der Benutzer ändert bei Bedarf für einzelne Desks den Namen, der für diese Desks im neu zu erstellenden Register angezeigt werden soll.
- Der Benutzer passt bei Bedarf mittels Drag & Drop oder durch die Angabe einer Positionsnummer die Reihenfolge an, in der die Desks im Deskset angezeigt werden sollen.
- Der Benutzer schliesst den Prozess ab, indem er die Auswahl mit «OK» bestätigt.

Das betrachtete Arbeitsplatzsystem lässt sich über die hier beschriebenen 2 Stufen (Deskset 11 und Anwendung) hinaus hierarchisch erweitern; so lassen sich z.B. mehrere Desksets 11 zu einem Anwendungsbereich, mehrere Anwendungsbereiche zur gesamten Anwendung zusammenfassen. Die Anwendungsbereiche lassen sich z.B. durch eine zweite zeile mit Laschen unterhalb der Laschen für den Zugang zu den Desksets, ansteuern. Die beschriebenen Eigenschaften des erfindungsgemässen Arbeitsplatzsystems lassen sich dann auch auf dieses hierarchisch erweiterte System anwenden.

### Liste der verwendeten Bezugszeichen und Symbole, Glossar

- 1: Bildschirm
- 11: Deskset
- 12: Desk
- 13: Verweis auf einen jetzt nicht aktiven Desk
- 14: Link zu Daten
- 15: Bildschirmelement, Lasche, Register
- 16: Verweis auf einen aktiven Desk
- 17: Icon, Symbol für ein (Anwendungs-)Programm
- 18: Link, durch Benutzer definierbar
- GUI: Graphical User Interface, Benutzeroberfläche

### Literaturliste

[1] US 2006/0069596 A1
   «Workflow Hosting Computing System using a collaborative application»
   Assignee: Microsoft Corporation, Redmond, WA, (US) Publication date: March 30. 2006.

## Patentansprüche

1. Arbeitsplatzsystem umfassend einen Rechner, einen Bildschirm (1) und Eingabemittel Tastatur und Maus, wobei auf dem Rechner ein Betriebssystem ausgeführt wird und ein Anwendungsprogramm mit einer Benutzeroberfläche für den Zugriff auf Daten mittels Links (14) vorgesehen ist und diese Daten lokal auf dem Rechner oder über ein Netzwerk auf anderen Rechnern zugreifbar sind,
**dadurch gekennzeichnet, dass**
diese Benutzeroberfläche durch eine Mehrzahl von Desksets (11) gebildet wird, wobei
i) jeder Deskset (11) aus einer Mehrzahl von Desks (12) gebildet wird, die aus dem Deskset (11) durch Verweise (16, 13) zugänglich sind;
ii) jeder Deskset (11) durch ein Bildschirmelement (15) identifiziert und adressierbar ist;
iii) jeder Desk (12) eine Mehrzahl von Links (14) für den Zugriff auf Daten aufweist und/oder in jedem Desk (12) Daten direkt angezeigt werden.

2. Arbeitsplatzsystem nach Anspruch 1,
**dadurch gekennzeichnet, dass**
mindestens ein Link auf andere Desks (12) oder auf andere Desksets (11) zeigt und bei Aktivieren eines vorgenannten Links mittels eines Eingabemittels die Benutzeroberfläche auf den anderen Desk oder den anderen Deskset wechselt.

3. Arbeitsplatzsystem nach Anspruch 1 oder 2,
**dadurch gekennzeichnet, dass**
ein Desk (12) eines ersten Desksets (11) in ein anderes Deskset (12) so kopierbar ist, dass es vom ursprünglichen Deskset abgetrennt ist, um dieses kopierte Desk (12) von Veränderungen am originalen Desk (12) auszuschliessen.

4. Arbeitsplatzsystem nach einem der Ansprüche 1 bis 3,
**dadurch gekennzeichnet, dass**
die Anordnung der Desks (12) innerhalb eines Desksets (11) durch eine Benutzerinteraktion individuell festlegbar ist.

5. Arbeitsplatzsystem nach Anspruch 1 oder 2,
**dadurch gekennzeichnet, dass**
aus verschiedenen Desks (12) eines oder mehrerer Desksets (11) eine eigenständige Datenbank generierbar ist, die eine eigenständige Anwendung bilden.

6. Arbeitsplatzsystem nach Anspruch 5,
**dadurch gekennzeichnet, dass**
die Datenbank so generiert ist, dass die in jedem Desk (12) direkt anzeigbaren Daten am ursprünglich Ort verbleiben.

7. Arbeitsplatzsystem nach Anspruch 5,
**dadurch gekennzeichnet, dass**
die Datenbank so generiert ist, dass die in jedem Desk (12) direkt anzeigbaren Daten in der Datenbank enthalten sind und **dadurch** unabhängig von deren Ursprung verändert werden können.

8. Arbeitsplatzsystem nach Anspruch 1 oder 2,
**dadurch gekennzeichnet, dass**
ein Deskset (12) einer ersten Anwendung immer Teil einer zweiten Anwendung ist, wobei eine Veränderung des Desksets (12) in der ersten Anwendung in der zweiten Anwendung vererbt wird.

9. Arbeitsplatzsystem nach Anspruch 8,
**dadurch gekennzeichnet, dass**
neu angelegte Desks (12) in der zweiten Anwendung auch in die erste Anwendung zurückvererbt werden.

10. Arbeitsplatzsystem nach einem der Ansprüche 1 bis 9,
**dadurch gekennzeichnet, dass**
mehrere Desksets (11) zu einem Bereich und mehrere Bereiche hierarchisch zusammenfasst sind.

11. Computerprogrammprodukt mit einem Anwendungsprogramm mit einer Benutzeroberfläche, das Softwaremittel enthält, das eine Strukturierung der Benutzeroberfläche für ein Arbeitsplatzsystem gemäss einem der Ansprüche 1 bis 10 vornimmt.
